(19) Europäisches Patentamt / European Patent Office / Office européen des brevets

(11) **EP 1 807 238 B1**

(12) **EUROPEAN PATENT SPECIFICATION**

(45) Date of publication and mention
of the grant of the patent:
**15.05.2013 Bulletin 2013/20**

(21) Application number: **05806720.8**

(22) Date of filing: **27.10.2005**

(51) Int Cl.:
*B23K 9/32* (2006.01)    *B23K 37/00* (2006.01)
*F04B 43/02* (2006.01)

(86) International application number:
**PCT/FI2005/000465**

(87) International publication number:
**WO 2006/045889 (04.05.2006 Gazette 2006/18)**

(54) **welding or flame-cutting apparatus**

Schweiss -oder Brennschneidvorrichtung

appareil de soudage ou de découpage à la flamme

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **28.10.2004 FI 20041392**

(43) Date of publication of application:
**18.07.2007 Bulletin 2007/29**

(73) Proprietor: **KEMPPI OY**
**15801 Lahti (FI)**

(72) Inventors:
• **HÄMÄLÄINEN, Jani**
**FI-15610 Lahti (FI)**

• **MÄKIMAA, Tapani**
**FI-15800 Lahti (FI)**

(74) Representative: **Arvela, Sakari Mikael et al**
**Seppo Laine Oy**
**Itämerenkatu 3 B**
**00180 Helsinki (FI)**

(56) References cited:
EP-A- 0 388 199        EP-A2- 0 388 199
WO-A-00/73008          WO-A2-00/73008
AT-B- 407 021          DE-A- 19 934 367
DE-A1- 19 934 367      GB-A- 2 368 104
US-A- 4 455 470        US-A1- 2005 205 542
US-B1- 6 216 814       US-B1- 6 930 282

## Description

The present invention relates to a welding or flame-cutting device according to the preamble of Claim 1. A device of this kind comprises a liquid-cooled torch, a cooling-liquid circuit connected to the torch, and a pump for circulating the cooling liquid in the cooling circuit.

The invention also relates to a method for cooling the liquid-cooled torch of a welding or flame-cutting device. Such device and such method are disclosed in DE 199 34 367 A1.

The term welding refers to connecting workpieces to each other using a filler or without a filler, in such a way that the joint between the workpieces is created by fusing the joint surfaces, using powerful plastic working, or with the aid of diffusion. Welding methods can be divided into fusion welding methods and pressure welding methods. In fusion welding methods, the joint is created by melting the joint surfaces while in pressure welding methods the joint is created by heating the joint surfaces and simultaneously pressing them tightly against each other.

Fusion welding methods include a group of traditional welding methods, such as oxyacetylene welding, metal arc welding, various gas-shielded arc welding methods, flux-cored arc welding, and submerged arc welding. In gas-shielded arc welding, welding takes place with the aid of a burning arc between the material being welded and the welding torch. In TIG welding, the arc is formed between the base material being welded and an electrode in the welding torch and in MIG/MAG welding between the base material and filler-metal wire fed from the welding torch. An inert or active shielding gas, which has the task of, among other things, shielding the molten weld from the detrimental effects of the air, is led to the welding joint.

In gas-shielded arc welding, the welding torch heats from the effect of the heat of the arc and the welding current flowing through the torch. To prevent excessive heating, the welding torch is cooled either with the aid of the flow of shielding gas or, when using powerful welding currents, with the aid of a cooling liquid circulated in the torch. Water, or a mixture of water and various alcohols is usually used as the cooling liquid. The cooling-liquid circuit of a liquid-cooled welding torch is formed of a cooling-liquid duct in the torch, a heat exchanger, with the aid of which the cooling liquid is cooled, a pump for circulating the cooling liquid in the cooling-liquid circuit, and the hoses or pipes connecting the various components of the circuit, as well as sensors measuring the liquid flow.

Generally, the cooling-liquid pumps used in welding equipment are of the so-called side-channel pump type, which are widely used, for example, as domestic water-supply pumps in domestic households. A pump of this type comprises an impeller and a pump housing with side channels. The rotation of the impeller makes the liquid move and thus creates a pressure difference between the pump's suction and pressure sides.

The axial and radial clearances between a side-channel pump's blades and the housing must be small, which makes the pump difficult and expensive to manufacture. In addition, the pump is large in size and heavy, making it difficult to be located in connection with a welding device. The pump's efficiency is also low.

The invention is intended to create an improved solution for the cooling of the torch in a welding or flame-cutting device.

The invention is based on using a diaphragm pump to pump the cooling liquid to the torch.

More specifically, the welding or flame-cutting device according to the invention is characterized by what is stated in the characterizing portion of Claim 1.

The method according to the invention is characterized by what is stated in the characterizing portion of Claim 8.

Considerable advantages are gained with the aid of the invention.

A diaphragm pump is smaller in size and lighter that the types of pumps traditionally used in welding or flame-cutting devices. Thanks to this, the device is small and light and can thus be moved more easily. A diaphragm pump is also more efficient than the cooling pumps traditionally used in welding and flame-cutting devices.

In a diaphragm pump motion is induced in the liquid by a elastic diaphragm that moves backward and forward. The diaphragm is moved backward and forwards with the aid of a moving mechanical component, for example, a connecting rod. The device driving the connecting rod, and the liquid being pumped are on opposite sides of the diaphragm and the diaphragm forms a seal between the connecting rod and the pump body, so that separate shaft seals are not needed, nor are there particularly dimensionally precise points in the construction. This means that the pump is economical to manufacture.

In one preferred embodiment of the invention, the diaphragm pump is driven by an electric motor, the electrical current drawn by which is measured. Because a diaphragm pump has a high efficiency, the current measurement gives a good indication of the loading state of the pump. Thus, the operating state of the cooling circuit of the welding torch can be monitored and possible problem situations during operation can be detected, on the basis of the current and/or voltage drawn by the motor. Examples of such problem situations are a lack of liquid or a blockage in the cooling circuit. In problem situations, the operation of the welding device can be stopped to prevent damage to the device. Measurement of the current of the pump motor can thus be used to replace the separate sensors installed in the cooling-liquid circuit to monitor the pressure and/or flow of the cooling liquid.

In the following, the invention is examined with the aid of examples and with reference to the accompanying drawings.

Figure 1 shows a MIG/MAG welding apparatus according to the invention.

Figure 2 shows a cross-sectional view of one preferred embodiment of the cooling pump used in the device according to the invention.

Figure 3 shows a schematic view of the cooling-liquid circuit of the device according to the invention.

Figure 4 shows a diagram of the attenuation of the attenuation principle of the pressure cycle produced by the cooling-liquid pump used in the invention and the attenuation of the variation in the flow and pressure of the cooling liquid at different points, as a function of time.

Figure 5 shows a diagram of the pump used in the invention and the electric motor driving the pump, as well as the variation in the flow and pressure of the cooling liquid and in the electric current drawn by the motor, as a function of time.

In connection with the present invention, the concept 'torch' refers to all welding torches and pistols used in welding equipment, as well as torches used in flame cutting. With the aid of a torch, thermal energy is brought to a workpiece to be welded or flame cut.

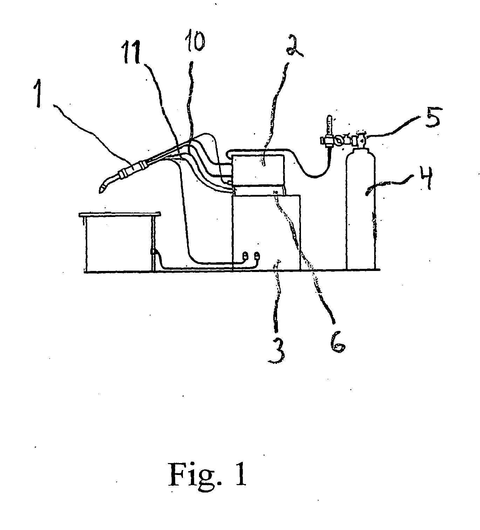

The welding equipment shown in Figure 1 comprises a welding torch or pistol 1, which the welder holds in their hand while welding. Filler-metal wire is fed to the welding torch 1 by a wire-feed device 2. The feed of the filler-metal wire to the welding torch 1 takes place with the aid of sets of feed wheels. The most widely used form of feed is so-called push feed, in which feed wheels located in the wire-feed device push the filler-metal wire into the welding pistol. This type of feed is restricted by the limited feed distance of the wire, which is normally a maximum of 3 - 8 metres. The welding operating area can be increased by locating the wire-feed device separately from the power supply, for example, on swing-boom, or by using an intermediate feed device or welding torch, in which the wire-feed wheels are located.

The welding torch 1 is connected to the power supply 3 by a power cable. During welding, current is fed from the power supply 3 to the electrode wire in the welding torch 1, thus creating an arc between the end of the electrode filler wire and the workpiece being welded. The arc melts the filler wire and the base material of the workpiece being welded. The molten weld and the arc are protected from the effect of the air by a shielding gas fed to the welding point. The shielding gas can be active, for example carbon dioxide, in which case it will react with the molten weld (MAG welding), or inert, when it does not react with the molten weld (MIG welding). The shielding-gas feed devices comprise a gas bottle 4, to which a pressure-reduction valve 5 is attached. A elastic hose is fitted between the gas bottle 4 and the welding torch 1, through which shielding gas is led to the welding torch 1. The shielding gas is then fed from the welding torch 1 to the molten weld.

When using powerful welding currents, the welding torch 1 heats up from the effect of the heat caused by the arc and the welding current. During welding, the welding torch 1 is cooled with the aid of a cooling liquid. For example, water or a mixture of water and alcohol (e.g., ethanol or glycol) can be used as the cooling liquid. Liquid-cooled welding torches 1 require a separate cooling device 6, in addition to the rest of the welding equipment. The cooling liquid is circulated from the cooling device 6, through the neck of the welding torch 1, back to the cooling device 6, so that the heat created in welding is transferred away from the welding torch 1 along with the cooling liquid. The cooling liquid also cools the copper flex in the welding torch 1, through which the welding current flows. This permits the use of a copper flex that is thin relative to the welding current, thanks to which the welding torch 1 is light relative to its loadability.

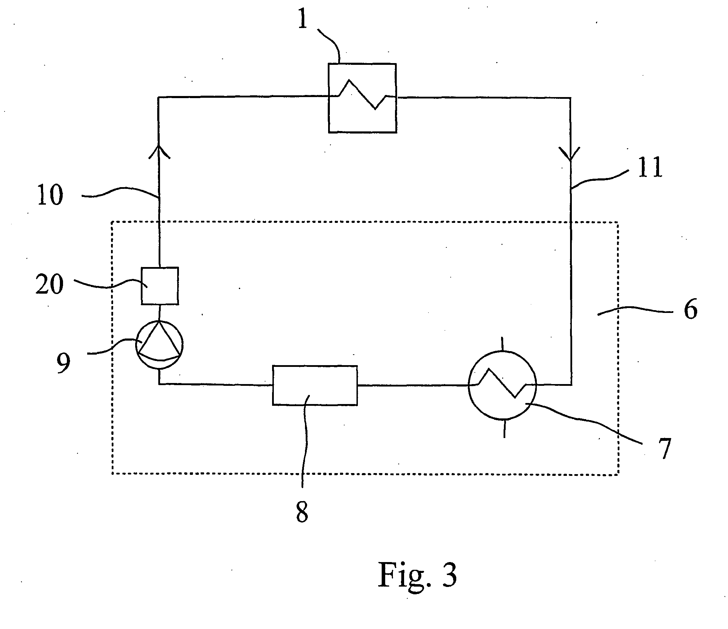

Figure 3 shows a schematic diagram of the cooling-liquid circuit of the welding torch. The cooling-liquid circuit comprises a cooling-liquid channel or channels in the welding torch 1, in which the cooling liquid flows, a pump 9 to circulate the cooling liquid, a heat exchanger 7 for cooling the cooling liquid returning from the welding torch 1, and a reservoir 8 for storing the cooling liquid fed to the pump 9. In addition, the cooling circuit comprises an attenuator, by means of which the pressure variations caused in the cooling liquid by the pump are attenuated. The various components of the cooling-liquid circuit are connected to each other by pipes or hoses. The pump 9, pressure-pulse attenuator 20, heat exchanger 7, and cooling-liquid reservoir 8 form a separate cooling device 6, which is located, for example, on top of the power supply 3. The pressure-pulse attenuator is connected to the pressure side of the pump. The pressure-pulse attenuator is connected to the torch 1 by a supply hose 10, through which the cooling liquid flows from the cooling device 6 to the torch 1. The heat exchanger 7 is connected to the torch by a return hose 11, through which the cooling liquid flows from the welding torch 1 to the heat exchanger 7.

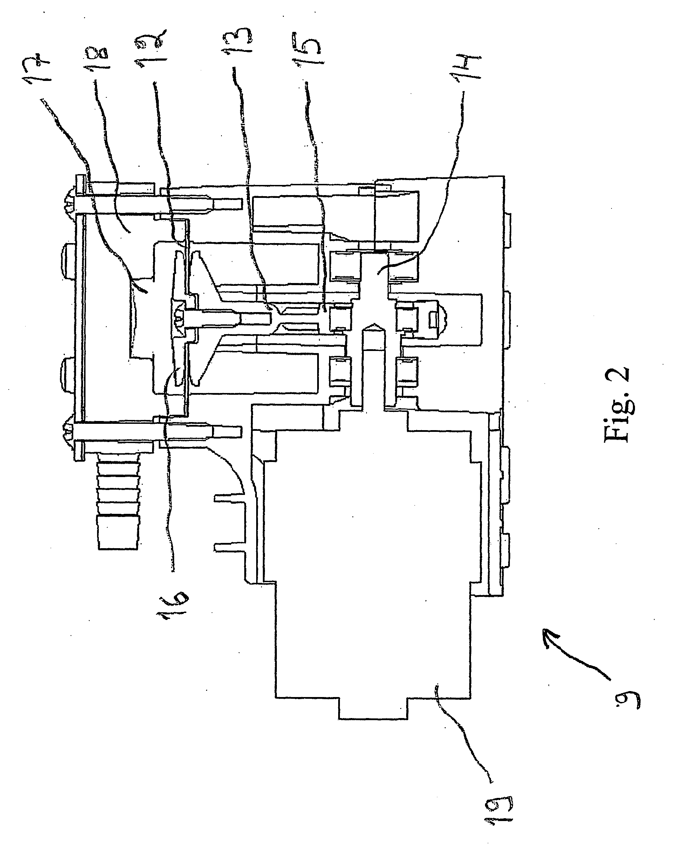

The circulation of the cooling liquid in the cooling-liquid circuit of the torch 1 is as follows: the pump 9 is used to pump the cooling liquid through the attenuator and along the supply hose 10 to the welding torch 1. The cooling liquid that has circulated in the cooling-liquid channels of the welding torch 1 is led through the return hose 11 to the heat exchanger 7 of the cooling device 6, in which the heat in the cooling liquid is transferred to the surrounding air. The cooling liquid is led from the heat exchanger 7 to the cooling-liquid reservoir 8 and from the reservoir 8 back to the pump 9. In the welding device according to the invention, the cooling liquid is pumped using a diaphragm pump 9, one preferred embodiment of which is shown in Figure 2. The flow of the liquid is created in the diaphragm pump 9 by an elastic diaphragm 12 moving backward and forward, which movement is created by a connecting rod 13 moving backward and forward and acting on the diaphragm. The backward and forward movement of the connecting rod 13 is created by a shaft 14 rotating eccentrically, to which the end 15 of the connecting rod is attached. The other end 16 of the connecting rod is attached to the middle of the diaphragm 12. In the pump 9, there is a liquid chamber 17, which is bounded by the pump body 18, the diaphragm 12, and the end 16 of the connecting rod that is attached to the diaphragm. The edges of the diaphragm 12 are entirely attached to the pump body 18, so that the diaphragm 12 acts as a seal between the pump body 18 and the one end 16 of the connecting rod and thus prevents the cooling liquid in the liquid chamber 17 from flowing between the pump body and the connecting rod, towards the shaft 14. The liquid being pumped is led to the liquid chamber through an intake channel. A valve that permits a flow only in the direction towards the liquid chamber is located in the intake channel. The liquid is led away from the liquid chamber through a supply channel. A valve, which permits a flow only in the direction away from the liquid chamber, is located in the supply channel. An electric motor, preferably a direct-current motor, by means of which the shaft 14 is rotated, is attached to the eccentric shaft 14 with the aid of either a flexible or rigid coupling.

When the shaft 14 is rotated by the electric motor 19, the connecting rod 13 and the diaphragm 12 move backward and forward, causing the volume of the liquid chamber 17 to decrease and increase intermittently. When the connecting rod 13 and the diaphragm 12 attached to it move downward in Figure 2, the volume of the liquid chamber 17 increases. At the same time, the valve in the intake channel opens and the liquid is free to flow from the liquid reservoir 8 to the liquid chamber 17. Correspondingly, when the connecting rod 13 and the diaphragm 12 move upward, the volume of the liquid chamber 17 decreases and the valve in the intake channel closes while the valve in the supply channel opens, so that the liquid is free to flow through the pressure-pulse attenuator to the supply hose 10. The maximum pressure of the cooling liquid fed to the attenuator of the diaphragm pump 9 is typically 0.5 - 4 bar, preferably about 2 bar.

The operation of the diaphragm pump 9 is intermittent, i.e. the pump 9 moves the liquid being pumped in doses, due to which the pressure in the pressure side of the pump 9 is not temporally constant but variable. In some applications, the intermittent pressure pulse created is detrimental, due to which the pressure pulse is attenuated by a pressure-pulse attenuator, which is located in the cooling-liquid circuit between the pressure side of the pump 9 and the welding torch 1. The following examines one alternative, which can be used to attenuate a pressure pulse.

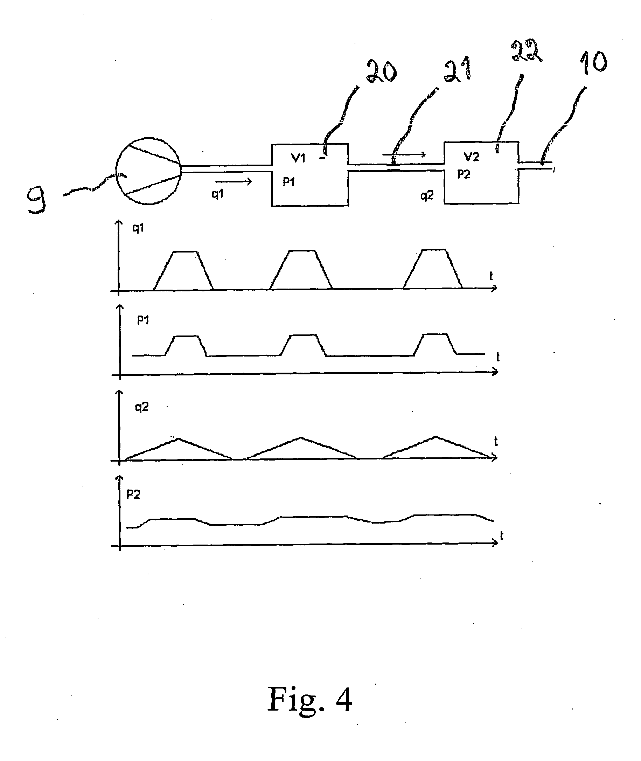

Figure 4 shows the principle of the attenuation of a pressure pulse. The diaphragm pump 9 produces a pulsed flow q1. The volume of the first reservoir 20 on the flow path is V1. The said reservoir 20 is made from an elastic material, so that the volume of the reservoir 20 increases as the pressure increases, so that the reservoir 20 acts as a pressure-pulse attenuator. Thus

$$dP = k1 * dV1$$

in which dP is the increase in pressure
k1 is a coefficient depicting the flexibility of the reservoir
dV1 is the output of a single work cycle of the pump.

The pressure variation, i.e. pressure pulse of the first reservoir 20 depends on the coefficient k1. If it would be possible to make the said reservoir from an infinitely elastic material (coefficient k1 = 0), no pressure pulse would appear. However, this is not possible in practice. In practice it is sufficient if the reservoir is finitely elastic.

A hose-like pressure-pulse attenuator 20 is placed between the pump 9 and the supply hose 10. The material of the pressure-pulse attenuator 20 is more elastic than that of the supply hose 10. The pressure-pulse attenuator 20 is located inside the casing of the cooling device 6. Typically, the output of a single work cycle of the diaphragm pump 9 of the cooling device of the welding torch 1 is 0.1 - 1 cm3, preferably about 0.3 cm3. The average output of the diaphragm pump 9 is in the range 0.2 - 21/min. It has been observed in tests that the aforementioned values are sufficient to achieve attenuation, if the constant depicting the elasticity of the first reservoir, i.e. the attenuator 20 is in the range 1 - 3 bar/cm3, preferably about 2 bar/cm3. The elasticity of the supply hose is typically more than 5 bar/cm3.

If necessary, better pressure-pulse attenuation can arranged by adding a throttle point 21 after the first attenuator 20 in the direction of flow of the cooling liquid and a second elastic reservoir, i.e. a second attenuator 22 after the throttle 21, as shown in Figure 4. The second attenuator 22 can be, like the first attenuator 20, a hose-like component, which is of a more elastic material than the supply hose 10. Alternatively, the exist hose 10 can act as the second attenuator, if it is sufficiently elastic. The throttle between the first attenuator 21 and the second attenuator 22 can be either a separate throttle point, or a nipple suitable for the purpose, which acts as a throttle.

The pressure pulse of the arrangement according to Figure 4 can be estimated as follows.

A value for the variation of the flow in the throttled pipe between the reservoirs 20 and 22 is obtained by assuming the pressure variation of the second reservoir 22 to be small

$$dq2 = dP1/R$$

in which dP1 is the pressure variation in the first reservoir 20

R is the flow resistance caused by the throttle 21 between the reservoirs.

The flow pulse dq2 causes a change dV2 in the volume of the second reservoir

$$dV2 = dq2*dt$$

in which dt is the duration of the flow pulse.

The aforementioned volume change dV2 causes a pressure pulse dP2 in the second reservoir 22

$$dP2 = k2*dV2$$

in which k2 is a coefficient depicting the elasticity of the second reservoir 22.

In this examination it is assumed that the flow resistance of the throttle 21 is significant. If the said resistance is small, then, from the point of view of pressure-pulse attenuation, the reservoirs 20 and 22 act as if they formed a single reservoir, the volume of which is the sum of the individual volumes and the coefficient k depicting the elasticity of which is obtained from the equation

$$k = k1*k2/(k1+k2).$$

When using two attenuators, the constant depicting the elasticity of the first reservoir 20 is in the range 1 - 3 bar/cm3, preferably about 2 bar/cm3 and the constant depicting the elasticity of the second reservoir 22 is typically greater, for example 4 - 8 bar/cm3. The flow resistance R caused by the throttle 21 between the reservoirs is typically in the range 0.01 - 0.1 bar*s/cm3, preferably about 0.025 bar*s/cm3. Figure 4 also shows the variation of the flow q and the pressure p of the cooling liquid in the attenuator 20, 22 as a function of time.

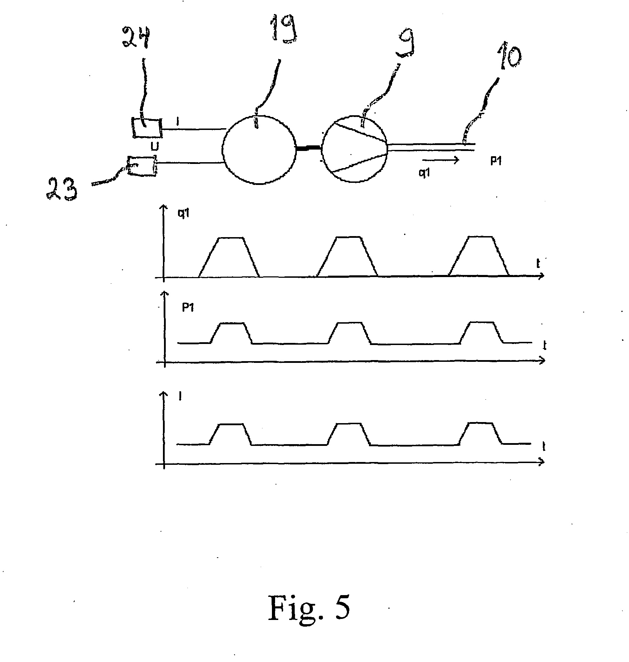

Because the operation of the diaphragm pump 9 is intermittent, the pump 9 produces a flow and pressure in pulses. Because of this, the mechanical moment developed by the pump 9 is also pulsed and depends on the pressure level of the liquid circuit on the pressure side of the pump 9. The electric current drawn by the electric motor 19 and particularly by a permanent-magnet electric motor depends on the moment developed by the motor at any time. In practice, the magnitude of the electric current drawn by a permanent-magnet motor is directly proportional to the moment developed by the motor 19. If the losses of the totality formed by the pump 9 and the motor 19 are reasonably small, as is the case in a combination of a diaphragm pump 9 and a permanent-magnet motor 19, the operating state of the pump can be monitored by measuring the electric current drawn by the motor 19. Figure 5 illustrates the mutual dependencies of the liquid flow q produced by the diaphragm pump 9, the liquid pressure, and the electric current I drawn by the motor, as a function of time t.

When the pump 9 runs without load, the level and variation of the load moment of the electric motor 9 are small. As the back pressure on the pressure side of the pump 9 increases, both the electric current I drawn by the motor and the variation in the current increase, in such a way that initially both quantities increase, but as the pressure level grows the pressure pulse remains nearly constant, even though the mean value of the pressure increases. This is due to the fact that in practical systems there is always some amount of flexibility, which reduces the pressure pulse. In addition, the pressure pulse can be attenuated using the attenuator 20, 22 described above. Thus, the pressure level p can be monitored by measuring the arithmetic mean of the electric current I drawn by the motor and/or the variation in the electric current.

The output of the diaphragm pump 9 depends not only on its capacity but also on its operating speed. The operating speed of the permanent-magnet electric motor 19 is, in the normal operating range, more or less directly proportional to the input voltage U of the motor. Thus the output of the pump is more or less directly proportional to the input voltage U of the motor. When using a diaphragm pump 9 for circulating the cooling liquid, it is necessary to be able to monitor the following situations:

1) the cooling liquid has run out
2) there is a blockage in the cooling-liquid circulation
3) normal operating state.

If the cooling liquid has run out in the circulating circuit, the pump 9 will run without load, in which case the level and variation of the moment of the motor 19 will be small. Thus a lower than normal level of electric current drawn by the motor 19 is an indication of the liquid having run out, or a blockage in the liquid circuit on the suction side of the pump. If, at the same time, the input voltage U of the motor is monitored, the possibility of a drop in current caused by the motor's voltage input can be excluded.

If there is a blockage in the liquid circulation on the pressure side of the pump 9, the pressure level p and the pressure pulse will be great. In that case, the value and especially the variation of the electric current I going to the motor will also be greater than normal. If there is a limiter in the motor operation, which limits the value of the electric current going to the motor to a specific maximum value, the input voltage U of the motor will drop. Thus, a large electric current I going to the motor and a lower than normal voltage U will be indications of a blockage in the part of the liquid circuit on the pressure side of the pump 9. In a normal operating state, the magnitude of the current going to the motor 19 varies over a normal variation range while the current variation caused by the pressure pulse is reasonable. The minimum and maximum values of the normal variation range of the motor current can be determined, for example, experimentally. The minimum value of the normal variation range of the current drawn by the motor is greater than the no-load current drawn by the motor while the maximum value is smaller than the current limit of the motor. Even though there is pressure-pulse attenuation in the liquid system, there will be sufficient variation in the electric current I drawn by the motor to indicate the operating state, provided the attenuator is constructed appropriately. On the other hand, indication can be implemented without recourse to the variation caused by the pressure pulse, though the said variation may facilitate practical implementation.

In the solution according to the invention, the magnitude of the electric current drawn by the electric motor 19 is measured using an ammeter 24 suitable for the purpose. Preferably, the input voltage to the electric motor 19 is also measured using a measuring device 23 suitable for the purpose. If the electric current drawn by the motor 19 is outside the normal range of current variation, there is a blockage in the cooling-liquid circuit, or there is an insufficient amount of cooling liquid. In such a case, the welding device's automation will automatically cut off the current input to the arc of the welding torch 1, thus preventing overheating of the welding torch 1 due to insufficient cooling. The normal variation range of the electric current drawn by the pump is determined, for example, experimentally.

In a normal operating situation, the maximum pressure of the cooling liquid led to the diaphragm pump 9 of the cooling-liquid circuit can be set as desired by adjusting the amount of current drawn by the electric motor 9.

Embodiments of the invention, differing from those disclosed above, can also be envisaged.

The solution according to the invention can also be used for cooling liquid-cooled welding torches of TIG, plasma, and submerged arc welding devices. In terms of cooling, MIG pistols and TIG torches are similar to each other. In addition, the solution according to the invention can be applied to cooling liquid-cooled torches used in flame cutting.

## Claims

1. Welding or flame-cutting device, which comprises a liquid-cooled torch (1), a cooling-liquid circuit connected to the torch (1), a pump (9) for circulating the cooling liquid in the cooling-liquid circuit, an electric motor (19) for driving the pump (9), **characterized in that** a measuring device (24) is provided for measuring the electric current drawn by the electric motor (19) in order to monitor the operating state of the cooling-liquid circuit, and an automation is connected to the electric-current measuring device (24) for stopping the welding device if the measurement value of the electric current drawn by the electric motor (19) deviates from a predefined range of variation.

2. Device according to Claim 1, **characterized in that** the electric-current measuring device (24) is an ammeter for measuring the current of the electric motor (19) of the pump (9) and for depicting the load state of the pump (9).

3. Device according to any of Claims 1, 2 **characterized by** an element for setting the maximum pressure of the cooling liquid to a desired magnitude by adjusting the strength of the current drawn by the electric motor (19).

4. Device according to any of Claims 1 - 3, **characterized in that** an exit hose (10) is arranged between the pump (9) and the torch (1) for leading the cooling liquid from the pump (9) to the torch (1) and an attenuator (20) is fitted in connection with the exit hose (10) for attenuating the pressure pulses caused in the cooling liquid by the diaphragm pump (9).

5. Device according to Claim 4, **characterized in that** the attenuator (20) is formed of a hose, through which the cooling liquid is arranged to flow and which is of a more elastic material than that of the exit hose (10).

6. Device according to Claim 4 or 5, **characterized by** a second attenuator (22), which is located in connection with the exit hose (10) after the first attenuator (20) in the direction of flow of the cooling liquid, and a throttle (21) fitted in the exit hose (10) between the attenuators (20, 22), in order to throttle the flow of the cooling liquid.

7. Device according to any of the above Claims, **characterized in that** the pump (9) is a diaphragm pump (9).

8. Method for cooling the liquid-cooled torch (1) of a welding or flame-cutting device, to which torch (1) is connected a cooling-liquid circuit, in which method the cooling liquid is circulated in the cooling-liquid circuit using a pump (9), and the pump (9) is driven by an electric motor (19), **characterized in that** the magnitude of the electric current drawn by the electric motor (19) is measured in order to monitor the operating state of the cooling-liquid circuit, and if the measurement value of the electric current deviates from a predefined range of variation the operation of the welding device is stopped.

9. Method according to Claim 8, **characterized in that** the current of the electric motor (19) of the pump (9) is measured in order to depict the load state of the pump.

10. Method according to any of Claims 8, 9, **characterized in that** the input voltage of the pump (9) is measured using a measuring device (23).

11. Method according to any of Claims 8-10, **characterized in that** the maximum pressure of the cooling liquid is set to a desired magnitude by adjusting the strength of the current drawn by the electric motor (19).

12. Method according to any of Claims 8 - 11, **characterized in that** the cooling liquid is led from the pump (9) to the torch (1) through an exit hose (10), and the pressure pulses in the cooling liquid caused by the pump (9) are attenuated using an attenuator (20) fitted in connection with the exit hose (10).

13. Method according to Claim 12, **characterized in that** a hose, through which the cooling liquid is led, and which is of a material that is more elastic than that of the exit hose (10), is used as the attenuator (20).

14. Method according to Claim 12 or 13, **characterized in that** the pressure variations caused in the cooling liquid by the pump (9) are attenuated using a second attenuator (22) fitted in connection with the exit hose (10), which is located after the first attenuator (20) in the direction of flow of the cooling liquid, and the flow of the cooling liquid is throttled between the attenuators (20, 22).

15. Method according to any of the above Claims 8 - 14, **characterized in that** a diaphragm pump (9) is used as the pump (9).

**Patentansprüche**

1. Schweiß- oder Brennschneidevorrichtung, die aufweist: einen flüssigkeitsgekühlten Brenner (1), einen Kühlflüssigkeitskreislauf, der mit dem Brenner (1) verbunden ist, eine Pumpe (9) zum Zirkulieren der Kühlflüssigkeit in dem Kühlflüssigkeitskreislauf, einen Elektromotor (19) zum Antreiben der Pumpe (9), **dadurch gekennzeichnet, dass** eine Messvorrichtung (24) vorgesehen ist, zum Messen des elektrischen Stroms, der von dem Elektromotor (19) verbraucht wird, um den Betriebszustand des Kühlflüssigkeitskreislaufs zu überwachen, und dass eine Automatisierungseinrichtung mit der Elektrischer-Strom-Messvorrichtung (24) verbunden ist, um die Schweißvorrichtung anzuhalten, wenn der Messwert des von dem Elektromotor (19) verbrauchten elektrischen Stroms von einer vordefinierten Schwankungsbreite abweicht.

2. Vorrichtung gemäß Anspruch 1, **dadurch gekennzeichnet, dass** die Elektrischer-Strom-Messvorrichtung (24) ein Amperemeter zum Messen des Stroms des Elektromotors (19) der Pumpe (9) und zum Darstellen des Lastzustands der Pumpe (9) ist.

3. Vorrichtung gemäß einem der Ansprüche 1, 2, **gekennzeichnet durch** ein Element zum Setzen des maximalen Drucks der Kühlflüssigkeit auf eine gewünschte Größe **durch** Einstellen der Stärke des von dem Elektromotor (19) verbrauchten Stroms.

4. Vorrichtung gemäß einem der Ansprüche 1 bis 3, **dadurch gekennzeichnet, dass** ein Ausgangsschlauch (10) zwischen der Pumpe (9) und dem Brenner (1) angeordnet ist, zum Leiten der Kühlflüssigkeit von der Pumpe (9) zu dem Brenner (1), und dass ein Dämpfungselement (20) in Verbindung mit dem Ausgangsschlauch (10) eingesetzt ist, zum Dämpfen der Druckimpulse, die von der Membranpumpe (9) in der Kühlflüssigkeit verursacht werden.

5. Vorrichtung gemäß Anspruch 4, **dadurch gekennzeichnet, dass** das Dämpfungselement (20) aus einem Schlauch gebildet ist, durch den hindurch die Kühlflüssigkeit zum Strömen eingerichtet ist und der aus einem elastischeren Material als das des Ausgangsschlauchs (10) ist.

6. Vorrichtung gemäß Anspruch 4 oder 5, **gekennzeichnet durch** ein zweites Dämpfungselement (22), das in Verbindung mit dem Ausgangsschlauch (10) in der Strömungsrichtung der Kühlflüssigkeit nach dem ersten Dämpfungselement (20) angeordnet ist, und eine Drossel (21), die in dem Ausgangsschlauch (10) zwischen den Dämpfungselementen (20, 22) angeordnet ist, um den Strom der Kühlflüssigkeit zu drosseln.

7. Vorrichtung gemäß einem der obigen Ansprüche, **dadurch gekennzeichnet, dass** die Pumpe (9) eine Membranpumpe (9) ist.

8. Verfahren zum Kühlen des flüssigkeitsgekühlten Brenners (1) einer Schweiß- oder Brennschneidevorrichtung, wobei ein Kühlflüssigkeitskreislauf mit dem Brenner (1) verbunden ist, wobei die Kühlflüssigkeit in dem Verfahren mittels einer Pumpe (9) in dem Kühlflüssigkeitskreislauf zirkuliert wird und die Pumpe (9) von einem Elektromotor (19) angetrieben wird, **dadurch gekennzeichnet, dass** die Stärke des von dem Elektromotor (19) verbrauchten elektrischen Stroms gemessen wird, um den Betriebszustand des Kühlflüssigkeitskreislaufs zu überwachen, und, wenn der Messwert des elektrischen Stroms von einer vordefinierten Schwankungsbreite abweicht, der Betrieb der Schweißvorrichtung angehalten wird.

9. Verfahren gemäß Anspruch 8, **dadurch gekennzeichnet, dass** der Strom des Elektromotors (19) der Pumpe (9) gemessen wird, um den Lastzustand der Pumpe darzustellen.

10. Verfahren gemäß einem der Ansprüche 8, 9, **dadurch gekennzeichnet, dass** die Eingangsspannung der Pumpe (9) mittels einer Messvorrichtung (23) gemessen wird.

11. Verfahren gemäß einem der Ansprüche 8 bis 10, **dadurch gekennzeichnet, dass** der maximale Druck der Kühlflüssigkeit durch Einstellen der Stärke des von dem Elektromotor (19) verbrauchten Stroms auf eine gewünschte Größe gesetzt wird.

12. Verfahren gemäß einem der Ansprüche 8 bis 11, **dadurch gekennzeichnet, dass** die Kühlflüssigkeit von der Pumpe (9) durch einen Ausgangsschlauch (10) zu dem Brenner (1) geleitet wird und die Druckimpulse in der Kühlflüssigkeit, die durch die Pumpe (9) verursacht werden, mittels eines Dämpfungselements (20) gedämpft werden, das in Verbindung mit dem Ausgangsschlauch (10) eingesetzt ist.

13. Verfahren gemäß Anspruch 12, **dadurch gekennzeichnet, dass** ein Schlauch, durch den die Kühlflüssigkeit geleitet wird und der aus einem Material ist, das elastischer als das des Ausgangsschlauchs (10) ist, als Dämpfungselement (20) verwendet wird.

14. Verfahren gemäß Anspruch 12 oder 13, **dadurch gekennzeichnet, dass** die Druckschwankungen, die von der Pumpe (9) in der Kühlflüssigkeit verursacht werden, mittels eines in Verbindung mit dem Ausgangsschlauch (10) eingesetzten zweiten Dämpfungselements (22), das in der Strömungsrichtung der Kühlflüssigkeit nach dem ersten Dämpfungselement (20) angeordnet ist, gedämpft werden, und der Kühlflüssigkeitsstrom zwischen den Dämpfungselementen (20, 22) gedrosselt wird.

15. Verfahren gemäß einem der obigen Ansprüche 8 bis 14, **dadurch gekennzeichnet, dass** eine Membranpumpe (9) als Pumpe (9) verwendet wird.

**Revendications**

1. Appareil de soudage ou de découpage à la flamme, qui comprend un chalumeau refroidi par un liquide (1), un circuit de liquide de refroidissement relié au chalumeau (1), une pompe (9) pour faire circuler le liquide de refroidissement dans le circuit de liquide de refroidissement, un moteur électrique (19) pour entraîner la pompe (9),

**caractérisé en ce qu'**il est fourni un dispositif de mesure (24) pour mesurer le courant électrique tiré par le moteur électrique (19) afin de surveiller l'état de fonctionnement du circuit de liquide de refroidissement, et

un automate est relié au dispositif de mesure de courant électrique (24) pour arrêter le dispositif de soudage si la valeur de mesure du courant électrique tiré par le moteur électrique (19) s'écarte d'une plage prédéfinie de variation.

2. Dispositif selon la revendication 1, **caractérisé en ce que** le dispositif de mesure de courant électrique (24) est un ampèremètre pour mesurer le courant du moteur électrique (19) de la pompe (9) et pour indiquer l'état de charge de la pompe (9).

3. Dispositif selon l'une quelconque des revendications 1 et 2, **caractérisé par** un élément pour régler la pression maximale du liquide de refroidissement à une grandeur souhaitée en ajustant la force du courant tiré par le moteur électrique (19).

4. Dispositif selon l'une quelconque des revendications 1 et 3, **caractérisé en ce qu'**un flexible de sortie (10) est agencé entre la pompe (9) et le chalumeau (1) pour conduire le liquide de refroidissement de la pompe (9) au chalumeau (1) et un atténuateur (20) est monté en liaison avec le flexible de sortie (10) pour atténuer les impulsions de pression provoquées dans le liquide de refroidissement par la pompe à diaphragme (9).

5. Dispositif selon la revendication 4, **caractérisé en ce que** l'atténuateur (20) est constitué d'un flexible à travers lequel le liquide de refroidissement est agencé pour s'écouler et qui est constitué d'un matériau plus élastique que celui du flexible de sortie (10).

6. Dispositif selon la revendication 4 ou 5, **caractérisé par** un deuxième atténuateur (22), qui est situé en liaison avec le flexible de sortie (10) après le premier atténuateur (20) dans la direction d'écoulement du liquide de refroidissement, et un régulateur (21) monté dans le flexible de sortie (10) entre les atténuateurs (20, 22) afin de réguler l'écoulement du liquide de refroidissement.

7. Dispositif selon l'une quelconque des revendications précédentes, **caractérisé en ce que** la pompe (9) est une pompe à diaphragme (9).

**8.** Procédé de refroidissement d'un chalumeau refroidi par un liquide (1) d'un dispositif de soudage ou de découpage à la flamme, un circuit de liquide de refroidissement étant relié au chalumeau (1), dans lequel le liquide de refroidissement est mis en circulation dans le circuit de liquide de refroidissement en utilisant une pompe (9), et la pompe (9) est entraînée par un moteur électrique (19), **caractérisé en ce que** la grandeur du courant électrique tiré par le moteur électrique (19) est mesurée afin de surveiller l'état de fonctionnement du circuit de liquide de refroidissement, et
si la valeur de mesure du courant électrique s'écarte d'une plage prédéfinie de variation, le fonctionnement du dispositif de soudage est arrêté.

**9.** Procédé selon la revendication 8, **caractérisé en ce que** le courant du moteur électrique (19) de la pompe (9) est mesuré afin d'indiquer l'état de charge de la pompe.

**10.** Procédé selon l'une quelconque des revendications 8 et 9, **caractérisé en ce que** la tension d'entrée de la pompe (9) est mesurée en utilisant un dispositif de mesure (23).

**11.** Procédé selon l'une quelconque des revendications 8 à 10, **caractérisé en ce que** la pression maximale du liquide de refroidissement est réglée à une grandeur souhaitée en ajustant la force du courant tiré par le moteur électrique (19).

**12.** Procédé selon l'une quelconque des revendications 8 à 11, **caractérisé en ce que** le liquide de refroidissement est conduit de la pompe (9) au chalumeau (1) à travers un flexible de sortie (10), et les impulsions de pression dans le liquide de refroidissement provoquées par la pompe (9) sont atténuées en utilisant un atténuateur (20) monté en liaison avec le flexible de sortie (10).

**13.** Procédé selon la revendication 12, **caractérisé en ce qu'**un flexible, à travers lequel le liquide de refroidissement est conduit, constitué d'un matériau plus élastique que celui du flexible de sortie (10), est utilisé en tant qu'atténuateur (20).

**14.** Procédé selon la revendication 12 ou 13, **caractérisé en ce que** les variations de pression provoquées dans le liquide de refroidissement par la pompe (9) sont atténuées en utilisant un deuxième atténuateur (22) monté en liaison avec le flexible de sortie (10), qui est situé après le premier atténuateur (20) dans la direction d'écoulement du liquide de refroidissement, et l'écoulement du liquide de refroidissement est régulé entre les atténuateurs (20, 22).

**15.** Procédé selon l'une quelconque des revendications 8 à 14, **caractérisé en ce qu'**une pompe à diaphragme (9) est utilisée en tant que pompe (9).

EP 1 807 238 B1

Fig. 1

10

EP 1 807 238 B1

Fig. 2

Fig. 3

EP 1 807 238 B1

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19934367 A1